(19)

**Europäisches Patentamt**
**European Patent Office**
**Office européen des brevets**

(11)  **EP 4 651 009 A1**

(12)  **EUROPEAN PATENT APPLICATION**
published in accordance with Art. 153(4) EPC

(43) Date of publication:
**19.11.2025  Bulletin 2025/47**

(21) Application number: **23943222.2**

(22) Date of filing: **11.10.2023**

(51) International Patent Classification (IPC):
**G06F 30/20** (2020.01)

(52) Cooperative Patent Classification (CPC):
**E21B 43/16; E21B 43/20; G06F 30/20;**
G06F 2113/08; Y02A 10/40

(86) International application number:
**PCT/CN2023/124047**

(87) International publication number:
**WO 2025/000743 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.06.2023  CN 202310793291**

(71) Applicant: **PetroChina Company Limited
Dongcheng District
Beijing 100007 (CN)**

(72) Inventors:
 • **FAN, Zuochun
   Panjin, Liaoning 124010 (CN)**
 • **XU, Hui
   Panjin, Liaoning 124010 (CN)**
 • **LI, Man
   Panjin, Liaoning 124010 (CN)**
 • **YAO, Rui
   Panjin, Liaoning 124010 (CN)**

 • **SHI, Haitao
   Panjin, Liaoning 124010 (CN)**
 • **XIA, Bo
   Panjin, Liaoning 124010 (CN)**
 • **LI, Siqi
   Panjin, Liaoning 124010 (CN)**
 • **HE, Binbin
   Panjin, Liaoning 124010 (CN)**
 • **LIU, Jia
   Panjin, Liaoning 124010 (CN)**
 • **BI, Junwei
   CN)**
 • **ZHANG, Mingjun
   Panjin, Liaoning 124010 (CN)**
 • **ZHAO, Lintian
   Panjin, Liaoning 124010 (CN)**
 • **ZHOU, Yi
   Panjin, Liaoning 124010 (CN)**

(74) Representative: **reuteler & cie SA
Chemin de la Vuarpillière 29
1260 Nyon (CH)**

(54)  **METHOD FOR DETERMINING POLYMER FLOODING DISPLACEMENT ALLOWABLE UNIT**

(57)    Examples of the present disclosure provide a method and a device for determining a displaceable unit developable by polymer flooding, a medium, and a processor, which belong to the technical field of petroleum development. The method includes: obtaining a plurality of core samples in a working area and relative permeability experiment data of the core samples, and obtaining a fitting function of water saturation parameters and water cut parameters in the working area according to the relative permeability experiment data; calculating a corresponding water saturation parameter threshold interval according to the fitting function and a preset water cut parameter threshold interval, and calculating a deep lateral resistivity parameter threshold interval corresponding to the water saturation parameter; and obtaining acoustic time difference parameter curves and deep lateral resistivity parameter curves at different depth positions, and determining the displaceable unit developable by polymer flooding according to whether a deep lateral resistivity parameter and an acoustic time difference parameter simultaneously fall into corresponding parameter threshold intervals at each depth position. According to the method for determining a displaceable unit developable by polymer flooding in the present application, the displaceable unit developable by polymer flooding can be found from a developed reservoir.

**(Cont. next page)**

EP 4 651 009 A1

Obtain relative permeability experiment data of a plurality of core samples, and obtain a fitting function of water saturation parameters and water cut parameters according to the relative permeability experiment data, where the core samples are obtained by core sampling in a working area

Calculate a water saturation parameter threshold interval corresponding to a water cut parameter threshold according to the fitting function and a preset water cut parameter threshold interval, and calculate a deep lateral resistivity parameter threshold interval corresponding to the water saturation parameter threshold interval

Obtain acoustic time difference parameter curves and deep lateral resistivity parameter curves at different depth positions, and determine, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, where a depth interval formed by positions developable by polymer flooding is taken as the displaceable unit developable by polymer flooding

FIG. 3

## Description

### Field of the Invention

The present disclosure relates to the technical field of petroleum development, and in particular to a method and a device for determining a displaceable unit developable by polymer flooding, a medium, and a processor.

### Background of the Invention

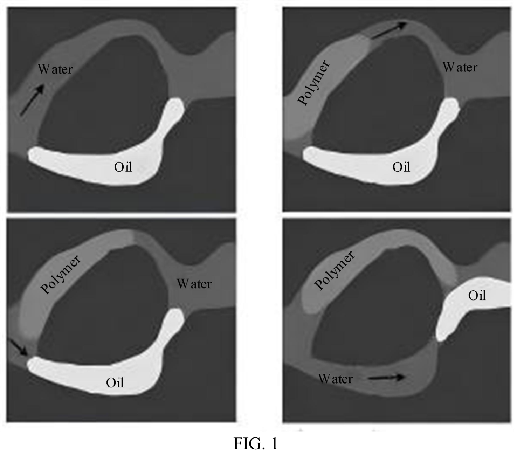

Polymer flooding is a type of tertiary oil recovery technology developed in recent years. With reference to FIG.1, it is actually a method for increasing production by adding water-soluble polymers to injected water to increase the viscosity of the injected water, improve a mobility ratio, expand a swept volume, and thus improve a recovery rate of crude oil.

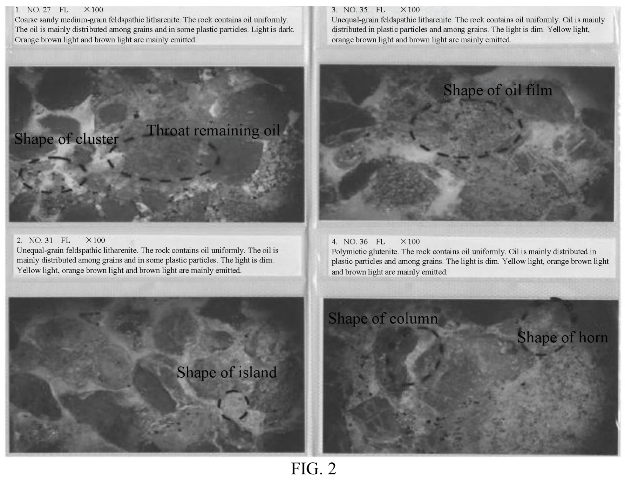

For areas where oil production has been produced once or twice, a situation faced by development of polymer flooding includes many displacement series of strata, high heterogeneity, complex injection-production relationship, and high reservoir water cut. Especially for a fully developed area, microscopic remaining oil is extremely scattered after water flooding, and the remaining oil exists in a shape of cluster, island, horn and oil film, or in a form of throat remaining oil, with reference to FIG. 2.

In order to better explore potential of the remaining oil, restore vitality of an oil field, and achieve purposes of stabilizing production and increasing storage, it is necessary to study seepage units of the oil field and fully understand development rules of different flow units at different times. Thus standards for selecting available units can be established, and polymer flood development can be guided.

### Summary of the Invention

An objective of examples of the present disclosure is to provide a method. The method can identify a displaceable unit developable by polymer flooding in a case that an area is developed, particularly an area is fully developed.

In order to achieve the above objective, the examples of the present disclosure provide a method for determining a displaceable unit developable by polymer flooding. The method includes: step 1: obtaining relative permeability experiment data of a plurality of core samples, and obtaining a fitting function of water saturation parameters and water cut parameters according to the relative permeability experiment data, where the core samples are obtained by core sampling in a working area; step 2: calculating a water saturation parameter threshold interval corresponding to a water cut parameter threshold according to the fitting function and a preset water cut parameter threshold interval, and calculating a deep lateral resistivity parameter threshold interval corresponding to the water saturation parameter threshold interval; and step 3: obtaining acoustic time difference parameter curves and deep lateral resistivity parameter curves at different depth positions, and determining, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, where a depth interval formed by positions developable by polymer flooding is taken as the displaceable unit developable by polymer flooding.

Preferably, the preset water cut parameter threshold interval comprises different sub-intervals, corresponding water saturation parameter threshold sub-intervals and deep lateral resistivity parameter threshold sub-intervals are calculated according to the water cut parameter threshold sub-intervals separately, and an effective development level of the displaceable unit developable by polymer flooding is determined according to the deep lateral resistivity parameters falling into different deep lateral resistivity parameter threshold sub-intervals, wherein displaceable units identified as being at a same effective development level are developed through a corresponding level of polymer formulation.

Further, the effective development levels comprise, from low to high, a first level, a second level, a third level, a fourth level and a fifth level, and from the first level to the fifth level, upper limits and lower limits of the deep lateral resistivity parameter threshold sub-intervals increase level by level, and upper limits and lower limits of the water cut parameter threshold sub-intervals and upper limits and lower limits of the water saturation parameter threshold sub-intervals decrease level by level.

Further, preset lower limits of the water cut parameter threshold sub-intervals from the first level to the fifth level are 90%, 80%, 60%, 40% and 10% respectively; the lower limit of the water saturation parameter threshold sub-interval of each level is calculated through the lower limit of the water cut parameter threshold sub-interval of a corresponding level; and the lower limit of the deep lateral resistivity parameter threshold sub-interval of each level is calculated through the lower limit of the water saturation parameter threshold sub-interval of a corresponding level.

Preferably, before the step 1 is performed, whether each target reservoir is developed is identified according to a preset determination condition, and then a displaceable unit developable by polymer flooding in a developed reservoir is determined according to steps 1-3.

Further, the preset determination condition comprises one or more methods selected from: a self-potential change method, a gas component determination method, and an oiliness identification method.

Preferably, a process of obtaining the fitting function in the step 1 comprises: determining a cross plot of water saturation and a water cut through the relative permeability experiment data, and obtaining a formula of the fitting function on the basis of the cross plot of the water saturation and the water cut, wherein a water cut of each sampling point is calculated through water relative permeability, oil relative permeability, absolute permeability, a sectional area, water viscosity, oil viscosity and a pressure difference of the corresponding sampling point; water saturation of each sampling point is corrected through the formula of the fitting function; and for a non-sampling point, water saturation and a water cut are calculated through the fitting function.

Preferably, in the step 2, a process of calculating the water saturation parameter threshold interval comprises: intercepting, from a function curve of the fitting function, a part of the curve within a range between an upper limit and a lower limit of the preset water cut parameter threshold interval, and determining an upper limit and a lower limit of the water saturation parameter threshold interval according to the part of the curve.

Preferably, in the step 2, a corresponding relationship between a water saturation parameter and a deep lateral resistivity is determined through the following formula, so as to obtain the deep lateral resistivity parameter threshold interval corresponding to the water saturation parameter threshold interval: $R_t = (a \times b \times R_{wh}) \div (S_w^{n1} \times \Phi^{m1})$, wherein $R_t$ is a deep lateral resistivity value; a and b are lithological coefficients obtained through a lithological experiment; $R_{wh}$ is a resistivity of a mixed liquid; $S_w$ is water saturation; m1 is a cementation index; n1 is a saturation index; and $\Phi$ is total porosity of a reservoir.

Preferably, m1 and n1 are calculated through salinity of the mixed liquid and a lithological-electrical parameter obtained through the lithological experiment; and the resistivity of the mixed liquid is calculated through the salinity of the mixed liquid and an oil reservoir temperature of a target reservoir.

Preferably, the method for determining a displaceable unit developable by polymer flooding further comprising: establishing an identification chart of a cross plot of an acoustic time difference and a resistivity according to a sampling data set in an actual production process, wherein the sampling data set comprises a group of known sampling points at effective development levels and measured values of a deep lateral resistivity parameter and an acoustic time difference parameter of each sampling point; and verifying correctness of the deep lateral resistivity parameter threshold interval obtained in the step 2 according to a distribution condition of the each sampling points in the identification chart, and adjusting and applying an upper limit and a lower limit of the deep lateral resistivity parameter threshold interval according to a verification result, so as to identify the displaceable unit developable by polymer flooding.

In another aspect, the present disclosure provides a device for determining a displaceable unit developable by polymer flooding. The device includes: a collection and analysis module configured to obtain relative permeability experiment data of a plurality of core samples, and obtain a fitting function of water saturation parameters and water cut parameters according to the relative permeability experiment data, where the core samples are obtained by core sampling in a working area; a processing module configured to calculate a water saturation parameter threshold interval corresponding to a water cut parameter threshold according to the fitting function and a preset water cut parameter threshold interval, and calculate a deep lateral resistivity parameter threshold interval corresponding to the water saturation parameter threshold interval; and an identification module configured to obtain acoustic time difference parameter curves and deep lateral resistivity parameter curves at different depth positions, and determine, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, where a depth interval formed by positions developable by polymer flooding is taken as the displaceable unit developable by polymer flooding.

Preferably, in the processing module, the preset water cut parameter threshold interval comprises different sub-intervals, corresponding water saturation parameter threshold sub-intervals and deep lateral resistivity parameter threshold sub-intervals are calculated according to the water cut parameter threshold sub-intervals separately, and an effective development level of the displaceable unit developable by polymer flooding is determined according to the deep lateral resistivity parameters falling into different deep lateral resistivity parameter threshold sub-intervals, wherein displaceable units identified as being at a same effective development level are developed through a corresponding level of polymer formulation.

Further, the effective development levels comprise, from low to high, a first level, a second level, a third level, a fourth level and a fifth level, and from the first level to the fifth level, upper limits and lower limits of the deep lateral resistivity parameter threshold sub-intervals increase level by level, and upper limits and lower limits of the water cut parameter threshold sub-intervals and upper limits and lower limits of the water saturation parameter threshold sub-intervals decrease level by level.

Further, preset lower limits of the water cut parameter threshold sub-intervals from the first level to the fifth level are 90%, 80%, 60%, 40% and 10% respectively; the lower limit of the water saturation parameter threshold sub-interval of each level is calculated through the lower limit of the water cut parameter threshold sub-interval of a corresponding level; and the lower limit of the deep lateral resistivity parameter threshold sub-interval of each level is calculated through the lower limit of the water saturation parameter threshold sub-interval of a corresponding level.

Preferably, the device for determining a displaceable unit developable by polymer flooding further comprising a preset analysis module, wherein before relative permeability experiment data of a sampling point are obtained through the collection and analysis module, whether each target reservoir is developed is identified according to a preset determination condition, and the collection and analysis module is started for a reservoir that is identified as being developed.

Further, the preset determination condition comprises one or more methods selected from: a self-potential change method, a gas component determination method, and an oiliness identification method.

Preferably, the device for determining a displaceable unit developable by polymer flooding further comprising: a verification module configured to establish an identification chart of a cross plot of an acoustic time difference and a resistivity according to a sampling data set in an actual production process, wherein the sampling data set comprises a group of known sampling points at effective development levels and measured values of a deep lateral resistivity parameter and an acoustic time difference parameter of each sampling point; and verify correctness of the deep lateral resistivity parameter threshold interval obtained in the step processing module according to a distribution condition of the each sampling points in the identification chart, and adjust and apply an upper limit and a lower limit of the deep lateral resistivity parameter threshold interval according to a verification result, so as to identify the displaceable unit developable by polymer flooding.

In yet another aspect, the present disclosure provides a machine-readable storage medium, storing instructions. The instructions are used for causing a machine to perform the method for determining a displaceable unit developable by polymer flooding in the present application.

In still another aspect, the present disclosure provides a processor, used for running a program. The program is used for executing the method for determining a displaceable unit developable by polymer flooding in the present application when run.

Through the above technical solutions, the relative permeability experiment data of the plurality of core samples are obtained first, and the fitting function of the water saturation parameter and the water cut parameter is obtained according to the relative permeability experiment data. Then the water saturation parameter threshold interval corresponding to the water cut parameter threshold interval is calculated according to the obtained fitting function and the preset water cut parameter threshold interval, and the corresponding deep lateral resistivity parameter threshold interval is calculated. Finally, according to the acoustic time difference parameter curves and the deep lateral resistivity parameter curves at different depth positions, whether the deep lateral resistivity parameter and the acoustic time difference parameter simultaneously fall into the corresponding parameter threshold intervals at each depth position is determined, and the displaceable unit developable by polymer flooding is determined. According to the method for determining a displaceable unit developable by polymer flooding in the present application, the displaceable unit developable by polymer flooding can be found from a developed reservoir.

Other features and advantages of the example of the present disclosure will be described in detail in the following detailed embodiments.

## Brief Description of Drawings

The accompanying drawings provide a further understanding of the examples of the present disclosure as a constituent part of the description and illustrate the examples of the present disclosure with the following detailed embodiments, and are not intended to limit the examples of the present disclosure. In the figures:

FIG. 1 is a schematic diagram of a redirection effect of polymer flooding in the prior art;

FIG. 2 is a diagram of microscopic remaining oil distribution in a fully developed area faced by polymer flooding in the prior art;

FIG. 3 is a flowchart of an example of a method for determining a displaceable unit developable by polymer flooding according to the present application;

FIG. 4A and FIG. 4B are cross plots of relative permeability of a water phase and an oil phase obtained in step 1 of the example of FIG. 3 respectively;

FIG. 5 is a graph of relative permeability obtained in combination with FIG. 4A and FIG. 4B and calculated water cut;

FIG. 6 is a cross plot of water saturation and water cut obtained from the relative permeability curve of FIG. 5;

FIG. 7 is a graph of a corresponding relationship between a cementation index and salinity obtained in step 2 of the example of FIG. 3;

FIG. 8 is a graph of a corresponding relationship between a saturation index and salinity obtained in step 2 of the example of FIG. 3;

FIG. 9 is a flowchart of another example of a method for determining a displaceable unit developable by polymer flooding according to the present application;

FIG. 10 is a cross plot of an acoustic time difference and a resistivity obtained according to the example of FIG. 9;

FIG. 11 is a schematic diagram showing that parameters of a group of points of a log at different depth positions are projected into the cross plot of FIG. 10;

FIG. 12 is a single-well composite histogram of the log described in FIG. 11;

FIG. 13 is a diagram of a composition structure of an example of a device for determining a displaceable unit developable by polymer flooding according to the present application; and

FIG. 14 is a diagram of a composition structure of another example of a device for determining a displaceable unit developable by polymer flooding according to the present application.

**Detailed Description of the Embodiments**

Specific embodiments of examples of the present disclosure are described in detail below in combination with the drawings. It should be understood that the specific embodiments described herein are merely used to describe and explain the examples of the present disclosure and are not intended to limit the examples of the present disclosure.

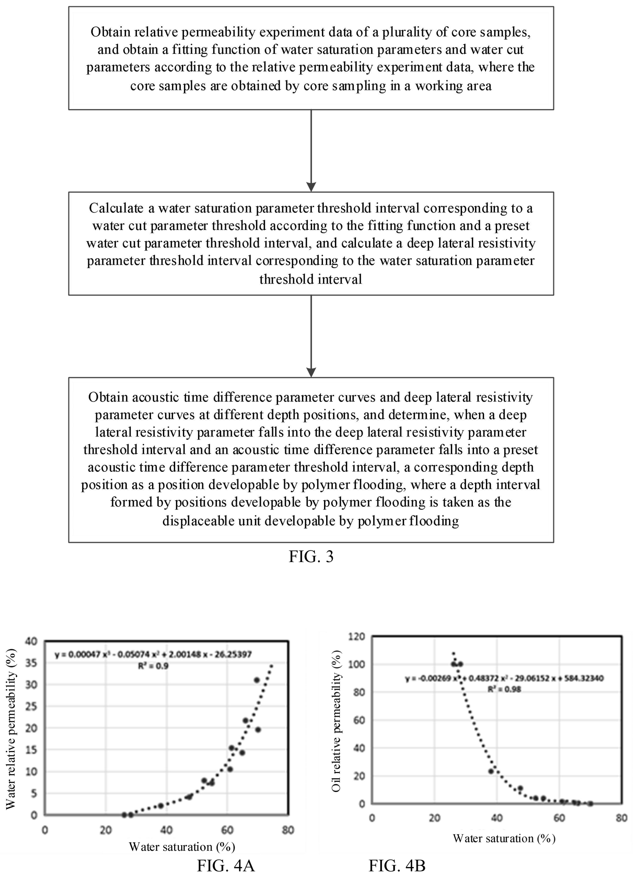

An example of the method for determining a displaceable unit developable by polymer flooding according to the present application is applied to heterogeneous sandstone oil reservoirs, but the present disclosure is not limited thereto. Implementation steps of the method are shown in FIG. 3 and include:

Step 1: relative permeability experiment data of a plurality of core samples are obtained, and a fitting function of water saturation parameters and water cut parameters is obtained according to the relative permeability experiment data, where the core samples are obtained by core sampling in a working area.

Step 2: a water saturation parameter threshold interval corresponding to a water cut parameter threshold is calculated according to the fitting function and a preset water cut parameter threshold interval, and a deep lateral resistivity parameter threshold interval corresponding to the water saturation parameter threshold interval is calculated.

Step 3: acoustic time difference parameter curves and deep lateral resistivity parameter curves at different depth positions are obtained, and when a deep lateral resistivity parameter falls into the deep lateral resistivity parameter threshold interval and an acoustic time difference parameter falls into a preset acoustic time difference parameter threshold interval, a corresponding depth position as a position developable by polymer flooding is determined, where a depth interval formed by positions developable by polymer flooding is taken as the displaceable unit developable by polymer flooding.

It should be noted that the preset water cut parameter threshold interval is selected according to field conditions possessed by oil recovery. For example, according to prepared construction conditions of polymer flooding technology and preparation conditions of a corresponding formula to be adopted, a corresponding water cut parameter threshold interval is selected. According to different field conditions, different water cut parameter threshold intervals can be used.

Further, a plurality of water cut parameter threshold sub-intervals can be preset. Different construction technical conditions of polymer flooding and corresponding polymer formulations are used for different sub-intervals. The plurality of preset water cut parameter threshold sub-intervals are shown in Table 1 below. Moreover, different sub-intervals also indicate effective development level of corresponding seepage units.

Table 1 Setting of water cut parameter threshold sub-interval

| Level of effective development unit | | Water cut FW(%) |
|---|---|---|
| Level-5 seepage unit | Weakly effective development unit | 10%-40% |

(continued)

| Level of effective development unit | | Water cut FW(%) |
|---|---|---|
| Level-4 seepage unit | Moderately effective development unit | 40%-60% |
| Level-3 seepage unit | Relatively effective development unit | 60%-80% |
| Level-2 seepage unit | Highly effective development unit | 80%-90% |
| Level-1 seepage unit | Extraordinarily effective development unit | ≥ 90% |

In some embodiments, whether each target reservoir is developed is identified according to a preset determination condition, and then a displaceable unit developable by polymer flooding in a developed reservoir is determined according to steps 1-3. The preset determination condition includes one or more of a self-potential change method, a gas component determination method, and an oiliness identification method.

Further, in some embodiments, the self-potential change method, the gas component determination method, and the oil oiliness identification method are also comprehensively used to assist in identifying and determining the displaceable unit developable by polymer flooding. Identification and determination standards are shown in Table 2 below.

Table 2 Qualitative grading evaluation standard for effective development units developable by polymer flooding

| Level | | Water cut FW(%) | Self-potential SP | Gas component determination | Oiliness |
|---|---|---|---|---|---|
| Level 5 Seepage unit | Weakly effective development unit | 10%-40% | An SP amplitude change is relatively small, and a baseline is slightly changed | Gas component determination shows active, an anomaly amplitude is large, and components are complete | An oiliness level is high and above an oil patch level |
| Level 4 Seepage unit | Moderately effective development unit | 40%-60% | An SP amplitude change is relatively large, and a baseline shifts relatively obviously | Gas component determination shows relatively active, an anomaly amplitude is relatively large, and components are relatively complete | An oiliness level is high and basically an oil patch level |
| Level 3 Seepage unit | Relatively effective development unit | 60%-80% | An SP amplitude change is large and has distortion, and a baseline shifts obviously | Gas component determination shows less active, an anomaly amplitude is not large, and components are incomplete | An oiliness level is low and below an oil patch level |
| Level 2 Seepage unit | Highly effective development unit | 80%-90% | An SP amplitude change is large and has severe distortion, and a baseline shifts obviously | Gas component determination shows low activeness, an anomaly amplitude is not large, and components are incomplete | An oiliness level is low and below an oil patch level |
| Level 1 Seepage unit | Extraordinarily effective development unit | ≥ 90% | An SP amplitude change is large and has severe distortion, and a baseline shifts obviously | Gas component determination shows less active, an anomaly amplitude is not large, and components are incomplete | An oiliness level is low and below an oil stain level |

Moreover, it should be noted that the lower limit of the water saturation parameter threshold sub-interval of each level is calculated through the lower limit of the water cut parameter threshold sub-interval of the corresponding level. The lower limit of the deep lateral resistivity parameter threshold sub-interval of each level is calculated through the lower limit of the water saturation parameter threshold sub-interval of the corresponding level.

That is to say, different oil reservoirs, especially different oil fields and work areas, have different reservoir and previous oil recovery conditions. Values of the water cut parameter threshold sub-intervals and the deep lateral resistivity parameter threshold sub-intervals should be calculated according to actual conditions. In this example, the calculated water saturation parameter threshold sub-intervals are shown in Table 3 below. The further calculated deep lateral resistivity parameter threshold sub-intervals are shown in Table 4 below.

Table 3 Water saturation parameter threshold sub-interval corresponding to level-5 effective development unit

| Level of effective development unit | | Water cut FW(%) | Water saturation (%) |
|---|---|---|---|
| Level-5 seepage unit | Weakly effective development unit | 10%-40% | 27%-35% |
| Level-4 seepage unit | Moderately effective development unit | 40%-60% | 35%-40% |
| Level-3 seepage unit | Relatively effective development unit | 60%-80% | 40%-48% |
| Level-2 seepage unit | Highly effective development unit | 80%-90% | 48%-55% |
| Level-1 seepage unit | Extraordinarily effective development unit | ≥ 90% | ≥ 55% |

Table 4 deep lateral resistivity parameter threshold sub-interval corresponding to level-5 effective development unit

| Level of effective development unit | | Water saturation (%) | Resistivity (Ω·m) |
|---|---|---|---|
| Level-5 seepage unit | Weakly effective development unit | 27%-35% | 40-55 |
| Level-4 seepage unit | Moderately effective development unit | 35%-40% | 28-40 |
| Level-3 seepage unit | Relatively effective development unit | 40%-48% | 20-28 |
| Level-2 seepage unit | Highly effective development unit | 48%-55% | 15-20 |
| Level-1 seepage unit | Extraordinarily effective development unit | ≥ 55% | ≤ 15 |

In some embodiments, a process of obtaining the fitting function in step 1 includes: a cross plot of water saturation and a water cut is determined through the relative permeability experiment data, and a formula of the fitting function is obtained on the basis of the cross plot of the water saturation and the water cut. A water cut of each sampling point is calculated through water relative permeability, oil relative permeability, absolute permeability, a sectional area, water viscosity, oil viscosity and a pressure difference of the corresponding sampling point. Water saturation of each sampling point is corrected through the formula of the fitting function. For a non-sampling point, water saturation and a water cut are calculated through the fitting function.

In some embodiments, in step 2, a process of calculating the water saturation parameter threshold interval includes: a part of the curve within a range between an upper limit and a lower limit of the preset water cut parameter threshold interval is intercepted from a function curve of the fitting function, and an upper limit and a lower limit of the water saturation parameter threshold interval are determined according to the part of the curve.

Compared with the prior art, the method for determining displaceable unit developable by polymer flooding in the present disclosure has technical advantages as follows:

(1) For oil reservoirs that have been developed, especially those that have been fully developed, even those with a plurality of displacement series and high heterogeneity, the sparsely distributed displacement units can be subdivided. Thus remaining oil potential can be better explored, and an objective of stabilizing production and increasing storage can be achieved.

(2) By reasonably setting the water saturation parameter threshold interval, especially the subdivided sub-intervals, a targeted polymer formula and corresponding polymer flooding technology can be used for improving recovery efficiency and oil production.

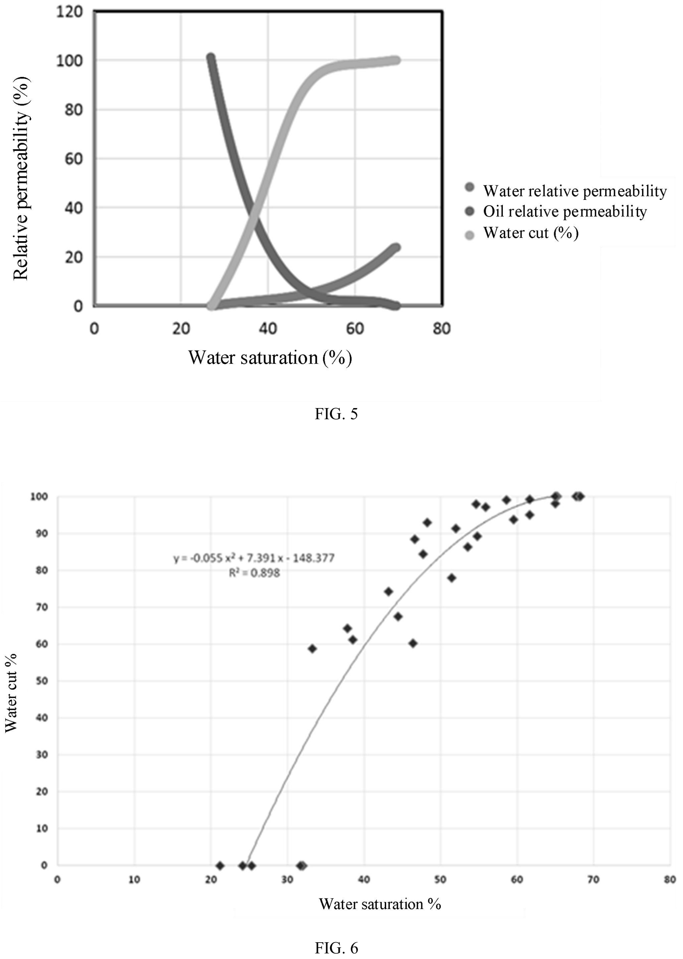

It should be noted that in step 1, a cross plot of water relative permeability and water saturation as shown in FIG. 4A and a cross plot of oil relative permeability and water saturation as shown in FIG. 4B are established through the relative permeability experiment data. Then corresponding water cut of each point in the figures is calculated according to a Darcy formula, so as to obtain a water cut curve as shown in FIG. 5. A relative permeability cross plot shown in FIG. 5 is obtained in combination with the cross plots of the water relative permeability and the oil relative permeability with the water saturation in FIGS. 4A and 4B. Thus a cross plot of the water cut and the water saturation as shown in FIG. 6 is obtained by collating. Finally a fitting formula of the water saturation and the water cut is obtained according to the curve of FIG. 6.

It should be noted that different work areas have different reservoir conditions, leading to different fitting formulas. Relative permeability experiments are required. A plurality of core samples are obtained in the work area by core sampling.

A fitting function of water saturation parameters and water cut parameters is obtained according to relative permeability experiment data of the core samples.

In this example, the water cut is calculated by using the calculation formula:

$$F_w = \frac{Q_w}{Q_w + Q_o}, \text{ where } Q_w = \frac{K_{rw} \times K \times A \times P}{U_w}, \text{ and } Q_o = \frac{K_{ro} \times K \times A \times P}{U_o}.$$

In the formula, $Q_w$ is water production, $Q_o$ is oil production, $K_{rw}$ is water relative permeability, $K_{ro}$ is oil relative permeability, $K$ is absolute permeability, $A$ is a sectional area, $P$ is a pressure difference, $U_w$ is water viscosity, and $U_o$ is oil viscosity. The above are relative permeability experiment data of each core sample.

In the example, the calculated fitting function of the water cut parameter and the water saturation parameter is $F_w = -0.055S_w^2 + 7.391S_w - 148.377$, where $S_w$ is the water saturation, and $F_w$ is the water cut.

It should also be noted that the fitting function obtained by fitting according to the above formulas is a reliable formula that discards abnormal data. Thus the fitting function can be used for correcting the experimental data of each core sample. Moreover, the fitting function is also used for calculating a water saturation parameter and a water cut parameter of a position point where no core sample is taken.

In step 2, values of salinity of mixed liquid of a reservoir are different due to different levels of effective development units developable by polymer flooding. Parameter values of the formula, such as a resistivity of the mixed liquid $R_{wh}$, $m1$ and $n1$, are parameters that dynamically change with the salinity of the mixed liquid of the reservoir. Lithological coefficients a and is b mainly influenced by reservoir lithology. A lithological change is small after water injection development. A value is taken according to actual blocks.

A calculation formula is as follows:

$$R_t = (a \times b \times R_{wh}) \div (S_w^{n1} \times \Phi^{m1}),$$

where $R_t$ is a deep lateral resistivity value; a and b are lithological coefficients obtained through a lithological experiment; $R_{wh}$ is the resistivity of the mixed liquid; $S_w$ is water saturation; $m1$ is a cementation index; $n1$ is a saturation index; and $\Phi$ is total porosity of a reservoir.

In the above formula, $m1$ and $n1$ are calculated through salinity of the mixed liquid and a lithological-electrical parameter obtained through the lithological experiment.

The resistivity of the mixed liquid is calculated through the salinity of the mixed liquid and an oil reservoir temperature of a target reservoir.

Specifically, after the oil reservoir is developed, injected water is mixed with original reservoir water. Due to a difference of salinity, ion diffusion occurs between the solutions. A resistivity of the original reservoir water changes into a resistivity of the mixed liquid, and is a parameter that changes with the salinity of the mixed liquid and an oil reservoir temperature of the target reservoir. The salinity of the mixed fluid and the oil reservoir temperature of target reservoir are determined according to actual production data.

$$R_{wh} = (3 \times 10^5 \div \sqrt[1.05]{P_z} + 1) \div (1.8T + 39),$$

in the formula,

$P_z$ is the salinity of the mixed liquid at mg/L;

$T$ is the oil reservoir temperature of the target reservoir, °C; and

$R_{wh}$ is the resistivity of the mixed liquid, $\Omega \cdot$ m.

The cementation index and the saturation index are parameters reflecting tortuosity of current conduction in a rock seepage channel, and are mainly determined by pore geometry, microscopic pore structure characteristics and a cementation state. Accordingly, the cementation index and the saturation index of the lithological-electrical parameters are closely related to a volume fraction of reservoir clay minerals. Since a large number of clay minerals are washed, a pore structure of the rock is changed. The cementation index $m$ is $m1$ dynamically changing with the salinity of the mixed liquid. The saturation index $n$ is $n1$ dynamically changing with the salinity of the mixed liquid.

In order to evaluate accurately, a large number of core samples are taken from a study area to measure the lithological-electrical parameters experimentally. Measured data of different salinity are regressed statistically. Finally a relationship between the lithological-electrical parameters and the salinity is obtained.

$$m1 = 5.9 \times 10^{-22} P_z{}^5 - 3.3 \times 10^{-17} P_z{}^4 + 7.2 \times 10^{-13} P_z{}^3 - 8.0 \times 10^{-9} P_z{}^2 + 0.0005 P_z + 0.7514$$

In the formula, $m1$ is the cementation index dynamically changing with the salinity of the mixed liquid; and $P_z$ is the salinity of the mixed liquid.

$$n1 = -2.2 \times 10^{-22} P_z{}^5 + 1.6 \times 10^{-17} P_z{}^4 - 4.5 \times 10^{-13} P_z{}^3 + 6.3 \times 10^{-9} P_z{}^2 - 0.0004 P_z + 2.5881$$

In the formula, $n1$ is the saturation index dynamically changing with the salinity of the mixed liquid; and $P_z$ is the salinity of the mixed liquid.

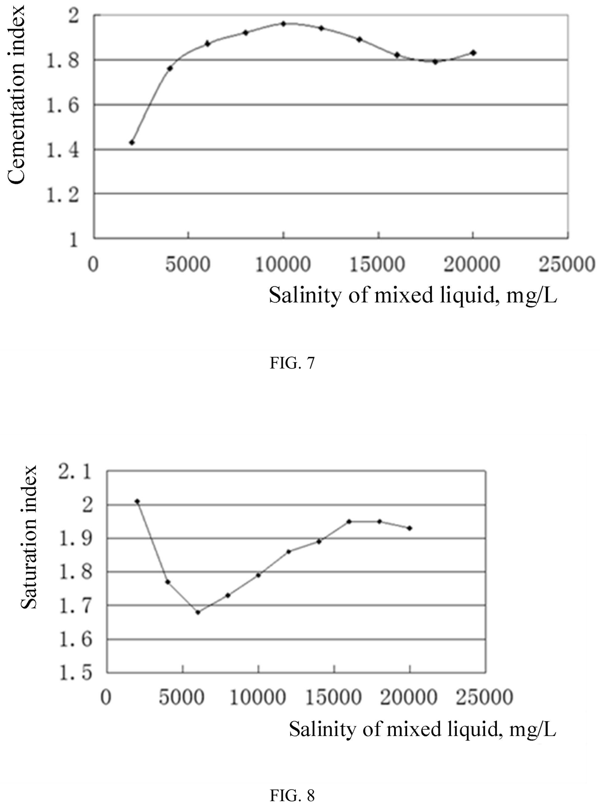

The corresponding relationship between the cementation index and the salinity obtained in the example is shown in FIG. 7. The corresponding relationship between the saturation index and the salinity is shown in FIG. 8.

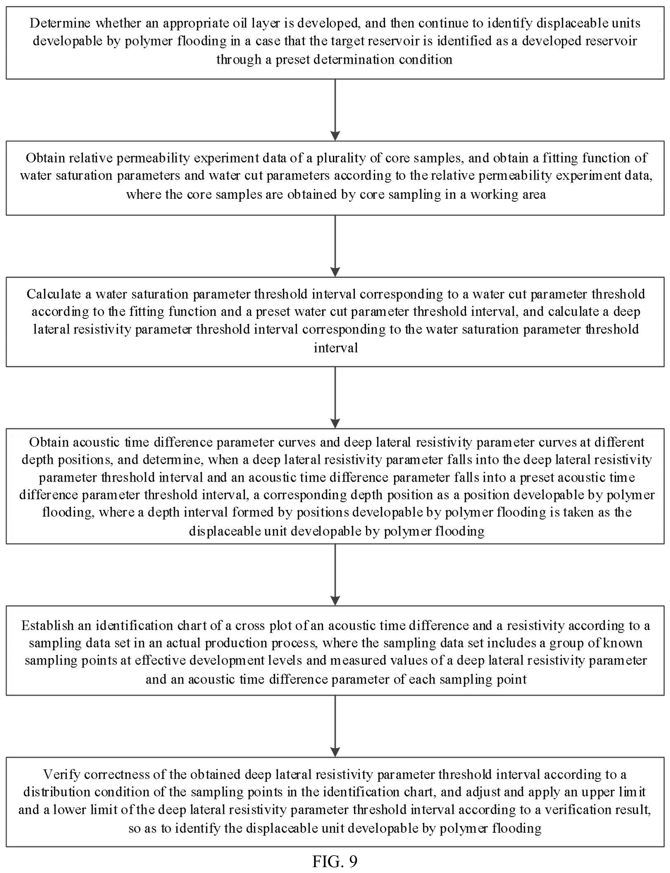

For possible oil reservoirs, development of which is unknown, and in order to further accurately calculate corresponding deep lateral resistivity parameter threshold intervals along with water saturation parameter changes in an oil recovery process, a flow of another preferred example of the method for determining a displaceable unit developable by polymer flooding in the present application is shown in FIG. 9. The method includes:

Pre-identification S0: whether an appropriate oil reservoir is developed is determined, and then it is continued to identify displaceable units developable by polymer flooding according to the following S1 to S5 in a case that the target reservoir is identified as a developed reservoir through a preset determination condition. In a case that the target reservoir is not developed, it indicates that the reservoir may be recovered in other manners, and a more economical manner should be used according to an actual situation.

S1: relative permeability experiment data of a plurality of core samples are obtained, and a fitting function of water saturation parameters and water cut parameters is obtained according to the relative permeability experiment data, where the core samples are obtained by core sampling in a working area.

S2: a water saturation parameter threshold interval corresponding to a water cut parameter threshold is calculated according to the fitting function and a preset water cut parameter threshold interval, and a deep lateral resistivity parameter threshold interval corresponding to the water saturation parameter threshold interval is calculated.

S3: acoustic time difference parameter curves and deep lateral resistivity parameter curves at different depth positions are obtained, and when a deep lateral resistivity parameter falls into the deep lateral resistivity parameter threshold interval and an acoustic time difference parameter falls into a preset acoustic time difference parameter threshold interval, a corresponding depth position as a position developable by polymer flooding is determined, where a depth interval formed by positions developable by polymer flooding is taken as the displaceable unit developable by polymer flooding.

S4: an identification chart of a cross plot of an acoustic time difference and a resistivity is established according to a sampling data set in an actual production process, where the sampling data set includes a group of known sampling points at effective development levels and measured values of a deep lateral resistivity parameter and an acoustic time difference parameter of each sampling point.

S5: correctness of the obtained deep lateral resistivity parameter threshold interval is verified according to a distribution condition of the sampling points in the identification chart, and an upper limit and a lower limit of the deep lateral resistivity parameter threshold interval are adjusted and applied according to a verification result, so as to identify the displaceable unit developable by polymer flooding.

S1-S3 are the same as those of the previous example and are not repeated herein. It should be noted that S4-S5 are used for further accurately calculating the corresponding deep lateral resistivity parameter threshold interval along with the water saturation parameter changes, and determining, according to the more accurate deep lateral resistivity parameter threshold interval, a level of the displaceable unit developable by polymer flooding, and technical conditions for polymer flooding construction and a corresponding polymer formula to be used.

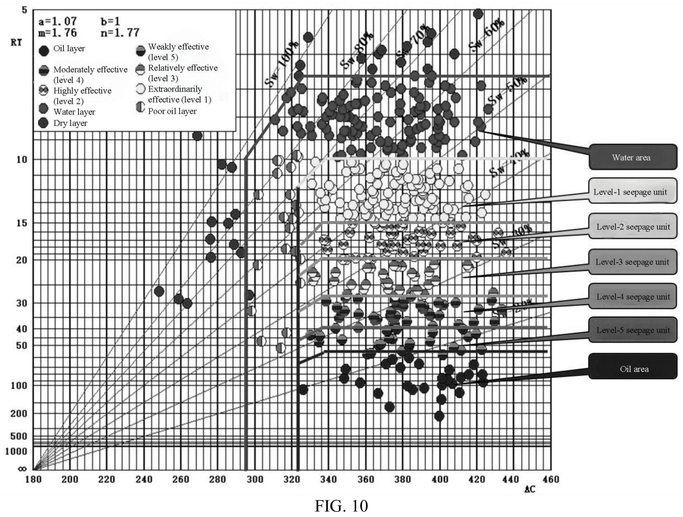

In the example, according to the sampling data set in an actual production process, an obtained cross plot of an acoustic time difference and a resistivity is shown in FIG. 10, indicating sampling data obtained under a condition of given lithological parameters and a given cementation index and saturation index of the example. The sampling data include values of acoustic time difference parameters and deep resistivity parameters.

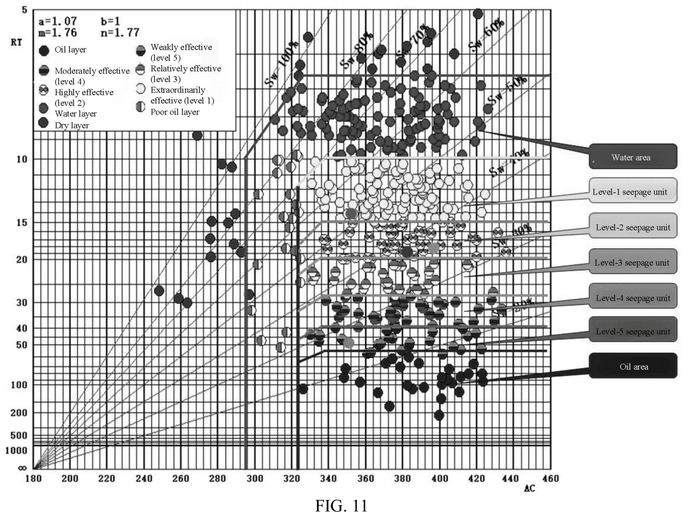

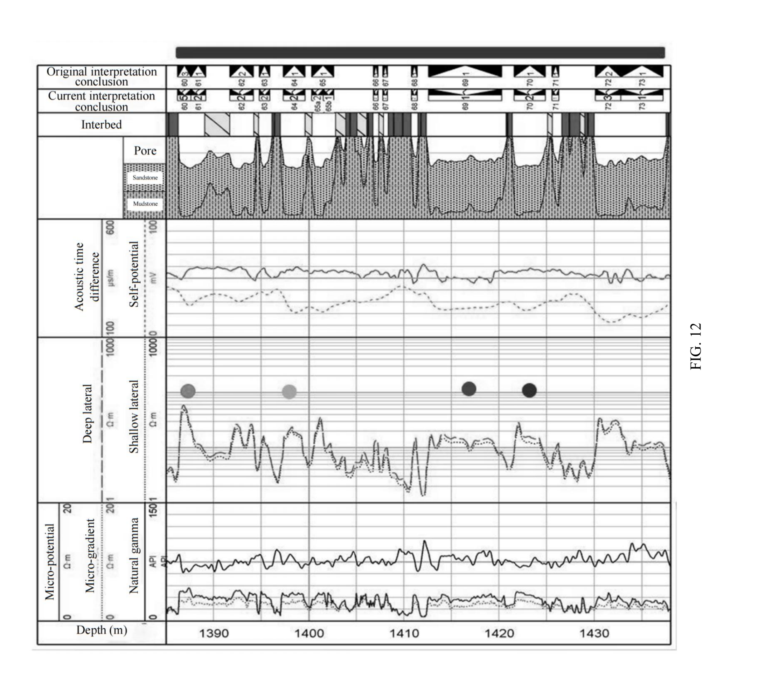

Moreover, for a log curve of a given log (No. J16-23-42C), as shown in FIG. 12, please refer to an acoustic time difference parameter curve and a deep resistivity parameter curve with emphasis. Corresponding values of the acoustic time difference and the deep resistivity at positions marked with dots are marked in the cross plot shown in FIG. 10, and FIG. 11 is obtained. It can be seen from FIG. 12 that compared with an original interpretation conclusion obtained in the prior art, a current interpretation conclusion obtained according to the technical solution in the present application can divide the original interpretation conclusion finely. For example, area 65 in FIG. 12 is identified as a first-level displaceable unit according to the original interpretation conclusion. In the current interpretation conclusion, the area is divided into 65a and 65b and is identified as a second-level displaceable unit and a first-level displaceable unit separately.

Compared with the prior art, a technical advantage of the example lies in that a range and level of the displaceable unit can be more accurately identified for oil reservoir with a plurality of displacement reservoir series and high heterogeneity.

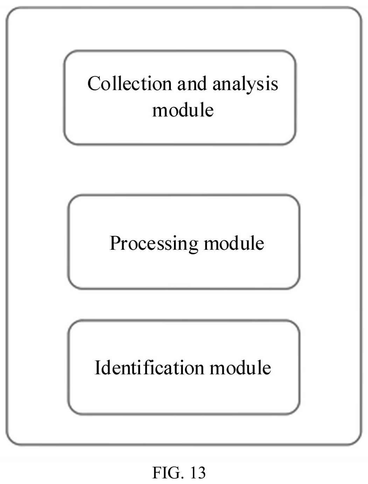

The examples of the present application further provide a device for determining a displaceable unit developable by polymer flooding. A composition structure of the device is shown in FIG. 13, including:

a collection and analysis module configured to obtain relative permeability experiment data of a plurality of core samples, and obtain a fitting function of water saturation parameters and water cut parameters according to the relative permeability experiment data, where the core samples are obtained by core sampling in a working area;

a processing module configured to calculate a water saturation parameter threshold interval corresponding to a water cut parameter threshold according to the fitting function and a preset water cut parameter threshold interval, and calculate a deep lateral resistivity parameter threshold interval corresponding to the water saturation parameter threshold interval; and

an identification module configured to obtain acoustic time difference parameter curves and deep lateral resistivity parameter curves at different depth positions, and determine, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, where a depth interval formed by positions developable by polymer flooding is taken as the displaceable unit developable by polymer flooding.

In some embodiments, in the processing module, the preset water cut parameter threshold interval includes different sub-intervals. Corresponding water saturation parameter threshold sub-intervals and deep lateral resistivity parameter threshold sub-intervals are calculated according to the water cut parameter threshold sub-intervals separately. An effective development level of the displaceable unit developable by polymer flooding is determined according to the deep lateral resistivity parameters falling into different deep lateral resistivity parameter threshold sub-intervals. Displaceable units identified as being at a same effective development level are developed through a corresponding level of polymer formulation.

In some embodiments, the effective development levels include, from low to high, a first level, a second level, a third level, a fourth level and a fifth level. From the first level to the fifth level, upper limits and lower limits of the deep lateral resistivity parameter threshold sub-intervals increase level by level, and upper limits and lower limits of the water cut parameter threshold sub-intervals and upper limits and lower limits of the water saturation parameter threshold sub-intervals decrease level by level.

Further, preset lower limits of the water cut parameter threshold sub-intervals from the first level to the fifth level are 90%, 80%, 60%, 40% and 10% respectively.

The lower limit of the water saturation parameter threshold sub-interval of each level is calculated through the lower limit of the water cut parameter threshold sub-interval of a corresponding level.

The lower limit of the deep lateral resistivity parameter threshold sub-interval of each level is calculated through the lower limit of the water saturation parameter threshold sub-interval of a corresponding level.

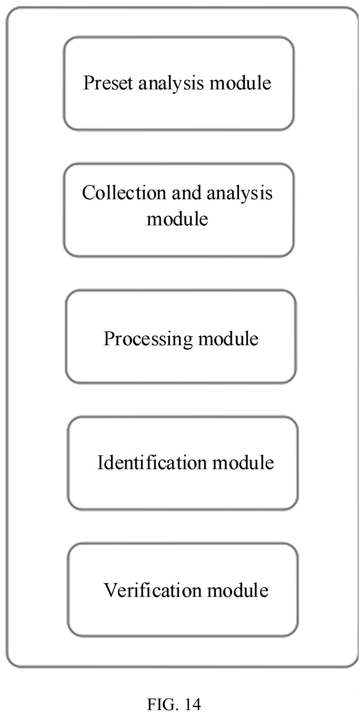

In some embodiments, the device for determining a displaceable unit developable by polymer flooding further includes a preset analysis module and a verification module. A composition structure of the device is shown in FIG. 14.

In the preset analysis module, before relative permeability experiment data of a sampling point are obtained through the collection and analysis module, whether each target reservoir is developed is identified according to a preset determination condition, and the collection and analysis module is started for a reservoir that is identified as being developed. The preset determination condition includes one or more of a self-potential change method, a gas component determination method, and an oiliness identification method.

The verification module is configured to establish an identification chart of a cross plot of an acoustic time difference and a resistivity according to a sampling data set in an actual production process, where the sampling data set includes a group of known sampling points at effective development levels and measured values of a deep lateral resistivity parameter and an acoustic time difference parameter of each sampling point; and

verify correctness of the deep lateral resistivity parameter threshold interval obtained in the step processing module according to a distribution condition of the sampling points in the identification chart, and adjust and apply an upper limit and a lower limit of the deep lateral resistivity parameter threshold interval according to a verification result, so as to identify the displaceable unit developable by polymer flooding.

The examples of the present disclosure provide a machine-readable storage medium, storing instructions. The instructions are used for causing a machine to perform the method for determining a displaceable unit developable by polymer flooding in the present application.

The examples of the present disclosure provide a processor, used for running a program. The program is used for executing the method for determining a displaceable unit developable by polymer flooding in the present application when run.

The examples of the present disclosure provide a device. The device includes a processor, a memory, and a program stored on the memory and runnable by the processor. When executing the program, the processor implements steps of the method for determining a displaceable unit developable by polymer flooding in the present application. The device herein may be a server, a personal computer (PC), a portable Android device (PAD), a mobile phone, etc.

The present disclosure further provides a computer program product. When executed on a data processing apparatus, the computer program product is suitable for executing a program initialized with steps of the method for determining a displaceable unit developable by polymer flooding in the present application.

Those skilled in the art should understand that the examples of the present application may be provided as methods, systems, or computer program products. Therefore, the present application may employ full hardware examples, full software examples, or software and hardware combined examples. Moreover, the present application may take the form of a computer program product implemented on one or more computer usable storage media (including, but not limited to, disc memories, compact disc read-only memories (CD-ROMs), optical memories, etc.) containing computer usable program codes.

The present application is described with reference to flowcharts and/or block diagrams of methods, devices (systems), and computer program products according to the examples of the present application. It should be understood that each flow and/or block in the flowcharts and/or the block diagrams and combinations of the flow and/or the block in the flowcharts and/or the block diagrams can be implemented by the computer program instructions. These computer program instructions can be provided for a processor of a general purpose computer, a special-purpose computer, an embedded processor, or other programmable data processing apparatuses to generate a machine, such that the instructions, which are executed by the processor of the computer or other programmable data processing apparatuses, can generate devices for implementing functions specified in one or more flows in the flowcharts and/or one or more blocks in the block diagrams.

These computer program instructions can also be stored in a computer-readable memory that can direct the computers or other programmable data processing apparatuses to work in a particular manner, such that the instructions stored in the computer-readable memory generate an article of manufacture including an instruction device that implements the functions specified in one or more flows in the flowcharts and/or one or more blocks in the block diagrams.

These computer program instructions can also be loaded onto the computer or another programmable data processing device, Therefore, a series of operation steps are executed on the computer or another programmable device to generate computer-implementable processing. The instructions executed on the computer or another programmable device provide steps configured to implement the functions specified in one or more flows in the flowcharts and/or one or more blocks in the block diagrams.

In a typical configuration, a calculation device includes one or more central processing units (CPUs), an input/output interface, a network interface, and a memory.

The memory may include a non-permanent memory, such as a random access memory (RAM) and/or a non-volatile memory, such as a read-only memory (ROM) or a flash RAM in a computer-readable medium. The memory is an instance of a computer-readable medium.

The computer-readable medium includes a permanent and non-permanent, removable and non-removable medium. Storage of information can be accomplished through any method or technology. The information may be computer-readable instructions, data structures, modules of programs, or other data. Instances of the computer storage medium include, but are not limited to, a phase change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technology, a compact disc read-only memory (CD-ROM), a digital versatile disc (DVD) or other optical storages, a magnetic cassette, a magnetic tape disk storage or other magnetic storage apparatuses or any other non-transmission medium that can be used for storing information that can be accessed by a computing apparatus. The computer-readable medium, as defined herein, does not include transitory media, such as modulated data signals and carrier waves.

It should also be noted that the terms "comprise", "include", "encompass", or their any other variations are intended to cover non-exclusive inclusion. Therefore, a process, method, product, or device including a series of elements further includes other elements that are not explicitly listed except for those elements, or further includes elements inherent to such a process, method, product, or device. Without more restrictions, the elements defined by the sentence "comprise a ..." or "include a ..." do not exclude the existence of other identical elements in the process, method, article, or device including the elements.

What are described above are merely the examples of the present application, but are not intended to limit the present application. For those skilled in the art, the present application can have various modifications and changes. Any modifications, equivalent substitutions, improvements, etc. within the spirit and principles of the present application are intended to fall within the scope of the claims of the present application.

**Claims**

1. A method for determining a displaceable unit developable by polymer flooding, comprising:

   step 1: obtaining relative permeability experiment data of a plurality of core samples, and obtaining a fitting function of water saturation parameters and water cut parameters according to the relative permeability experiment data, wherein the core samples are obtained by core sampling in a working area;
   step 2: calculating a water saturation parameter threshold interval corresponding to a water cut parameter threshold according to the fitting function and a preset water cut parameter threshold interval, and calculating a deep lateral resistivity parameter threshold interval corresponding to the water saturation parameter threshold interval; and
   step 3: obtaining acoustic time difference parameter curves and deep lateral resistivity parameter curves at different depth positions, and determining, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, wherein a depth interval formed by positions developable by polymer flooding is taken as the displaceable unit developable by polymer flooding.

2. The method according to claim 1, wherein the preset water cut parameter threshold interval comprises different sub-intervals, corresponding water saturation parameter threshold sub-intervals and deep lateral resistivity parameter threshold sub-intervals are calculated according to the water cut parameter threshold sub-intervals separately, and an effective development level of the displaceable unit developable by polymer flooding is determined according to the deep lateral resistivity parameters falling into different deep lateral resistivity parameter threshold sub-intervals, wherein displaceable units identified as being at a same effective development level are developed through a corresponding level of polymer formulation.

3. The method according to claim 2, wherein the effective development levels comprise, from low to high, a first level, a second level, a third level, a fourth level and a fifth level, and from the first level to the fifth level, upper limits and lower limits of the deep lateral resistivity parameter threshold sub-intervals increase level by level, and upper limits and lower limits of the water cut parameter threshold sub-intervals and upper limits and lower limits of the water saturation parameter threshold sub-intervals decrease level by level.

4. The method according to claim 3, wherein preset lower limits of the water cut parameter threshold sub-intervals from the first level to the fifth level are 90%, 80%, 60%, 40% and 10% respectively;

   the lower limit of the water saturation parameter threshold sub-interval of each level is calculated through the lower limit of the water cut parameter threshold sub-interval of a corresponding level; and
   the lower limit of the deep lateral resistivity parameter threshold sub-interval of each level is calculated through the lower limit of the water saturation parameter threshold sub-interval of a corresponding level.

5. The method according to claim 1, wherein before step 1 is performed, whether each target reservoir is developed is identified according to a preset determination condition, and then a displaceable unit developable by polymer flooding in a developed reservoir is determined according to steps 1-3.

6. The method according to claim 5, wherein the preset determination condition comprises one or more methods selected from: a self-potential change method, a gas component determination method, and an oiliness identification method.

7. The method according to claim 1, wherein a process of obtaining the fitting function in the step 1 comprises:

   determining a cross plot of water saturation and a water cut through the relative permeability experiment data, and obtaining a formula of the fitting function on the basis of the cross plot of the water saturation and the water cut, wherein

a water cut of each sampling point is calculated through water relative permeability, oil relative permeability, absolute permeability, a sectional area, water viscosity, oil viscosity and a pressure difference of the corresponding sampling point;

water saturation of each sampling point is corrected through the formula of the fitting function; and

for a non-sampling point, water saturation and a water cut are calculated through the fitting function.

8. The method according to claim 1, wherein in the step 2, a process of calculating the water saturation parameter threshold interval comprises: intercepting, from a function curve of the fitting function, a part of the curve within a range between an upper limit and a lower limit of the preset water cut parameter threshold interval, and determining an upper limit and a lower limit of the water saturation parameter threshold interval according to the part of the curve.

9. The method according to claim 1, wherein in the step 2, a corresponding relationship between a water saturation parameter and a deep lateral resistivity is determined through following formula, so as to obtain the deep lateral resistivity parameter threshold interval corresponding to the water saturation parameter threshold interval:

$$\mathrm{R}_t = (\mathrm{a} \times \mathrm{b} \times \mathrm{R}_{wh}) \div (\mathrm{S}_w{}^{n1} \times \Phi^{m1}),$$

wherein

$R_t$ is a deep lateral resistivity value;
a and b are lithological coefficients obtained through a lithological experiment;
$R_{wh}$ is a resistivity of a mixed liquid;
$S_w$ is water saturation;
$m1$ is a cementation index;
$n1$ is a saturation index; and
$\Phi$ is total porosity of a reservoir.

10. The method according to claim 9, wherein

$m1$ and $n1$ are calculated through salinity of the mixed liquid and a lithological-electrical parameter obtained through the lithological experiment; and
the resistivity of the mixed liquid is calculated through the salinity of the mixed liquid and an oil reservoir temperature of a target reservoir.

11. The method according to any one of claims 1-10, further comprising:

establishing an identification chart of a cross plot of an acoustic time difference and a resistivity according to a sampling data set in an actual production process, wherein the sampling data set comprises a group of known sampling points at effective development levels and measured values of a deep lateral resistivity parameter and an acoustic time difference parameter of each sampling point; and
verifying correctness of the deep lateral resistivity parameter threshold interval obtained in the step 2 according to a distribution condition of the each sampling points in the identification chart, and adjusting and applying an upper limit and a lower limit of the deep lateral resistivity parameter threshold interval according to a verification result, so as to identify the displaceable unit developable by polymer flooding.

12. A device for determining a displaceable unit developable by polymer flooding, comprising:

a collection and analysis module configured to obtain relative permeability experiment data of a plurality of core samples, and obtain a fitting function of water saturation parameters and water cut parameters according to the relative permeability experiment data, wherein the core samples are obtained by core sampling in a working area;
a processing module configured to calculate a water saturation parameter threshold interval corresponding to a water cut parameter threshold according to the fitting function and a preset water cut parameter threshold interval, and calculate a deep lateral resistivity parameter threshold interval corresponding to the water saturation parameter threshold interval; and
an identification module configured to obtain acoustic time difference parameter curves and deep lateral resistivity parameter curves at different depth positions, and determine, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, wherein a depth interval formed by positions developable by polymer flooding is taken as the displaceable unit developable by polymer flooding.

13. The device according to claim 12, wherein in the processing module, the preset water cut parameter threshold interval comprises different sub-intervals, corresponding water saturation parameter threshold sub-intervals and deep lateral resistivity parameter threshold sub-intervals are calculated according to the water cut parameter threshold sub-intervals separately, and an effective development level of the displaceable unit developable by polymer flooding is determined according to the deep lateral resistivity parameters falling into different deep lateral resistivity parameter threshold sub-intervals, wherein displaceable units identified as being at a same effective development level are developed through a corresponding level of polymer formulation.

14. The device according to claim 13, wherein the effective development levels comprise, from low to high, a first level, a second level, a third level, a fourth level and a fifth level, and from the first level to the fifth level, upper limits and lower limits of the deep lateral resistivity parameter threshold sub-intervals increase level by level, and upper limits and lower limits of the water cut parameter threshold sub-intervals and upper limits and lower limits of the water saturation parameter threshold sub-intervals decrease level by level.

15. The device according to claim 14, wherein

preset lower limits of the water cut parameter threshold sub-intervals from the first level to the fifth level are 90%, 80%, 60%, 40% and 10% respectively;
the lower limit of the water saturation parameter threshold sub-interval of each level is calculated through the lower limit of the water cut parameter threshold sub-interval of a corresponding level; and the lower limit of the deep lateral resistivity parameter threshold sub-interval of each level is calculated through the lower limit of the water saturation parameter threshold sub-interval of a corresponding level.

16. The device according to claim 12, further comprising a preset analysis module, wherein before relative permeability experiment data of a sampling point are obtained through the collection and analysis module, whether each target reservoir is developed is identified according to a preset determination condition, and the collection and analysis module is started for a reservoir that is identified as being developed.

17. The device according to claim 16, wherein the preset determination condition comprises one or more methods selected from: a self-potential change method, a gas component determination method, and an oiliness identification method.

18. The device according to any one of claims 12 to 17, further comprising: a verification module configured to establish an identification chart of a cross plot of an acoustic time difference and a resistivity according to a sampling data set in an actual production process, wherein the sampling data set comprises a group of known sampling points at effective development levels and measured values of a deep lateral resistivity parameter and an acoustic time difference parameter of each sampling point; and
verify correctness of the deep lateral resistivity parameter threshold interval obtained in the processing module according to a distribution condition of the each sampling points in the identification chart, and adjust and apply an upper limit and a lower limit of the deep lateral resistivity parameter threshold interval according to a verification result, so as to identify the displaceable unit developable by polymer flooding.

19. A machine-readable storage medium, storing instructions, wherein the instructions are used for causing a machine to perform the method for determining a displaceable unit developable by polymer flooding according to any one of claims 1 to 11.

20. A processor, used for running a program, wherein the program is used for executing the method for determining a displaceable unit developable by polymer flooding according to any one of claims 1-11 when run.

FIG. 1

1. NO. 27 FL ×100
Coarse sandy medium-grain feldspathic litharenite. The rock contains oil uniformly. The oil is mainly distributed among grains and in some plastic particles. Light is dark. Orange brown light and brown light are mainly emitted.

3. NO. 35 FL ×100
Unequal-grain feldspathic litharenite. The rock contains oil uniformly. Oil is mainly distributed in plastic particles and among grains. The light is dim. Yellow light, orange brown light and brown light are mainly emitted.

2. NO. 31 FL ×100
Unequal-grain feldspathic litharenite. The rock contains oil uniformly. The oil is mainly distributed among grains and in some plastic particles. The light is dim. Yellow light, orange brown light and brown light are mainly emitted.

4. NO. 36 FL ×100
Polymictic glutenite. The rock contains oil uniformly. Oil is mainly distributed in plastic particles and among grains. The light is dim. Yellow light, orange brown light and brown light are mainly emitted.

FIG. 2

Obtain relative permeability experiment data of a plurality of core samples, and obtain a fitting function of water saturation parameters and water cut parameters according to the relative permeability experiment data, where the core samples are obtained by core sampling in a working area

Calculate a water saturation parameter threshold interval corresponding to a water cut parameter threshold according to the fitting function and a preset water cut parameter threshold interval, and calculate a deep lateral resistivity parameter threshold interval corresponding to the water saturation parameter threshold interval

Obtain acoustic time difference parameter curves and deep lateral resistivity parameter curves at different depth positions, and determine, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, where a depth interval formed by positions developable by polymer flooding is taken as the displaceable unit developable by polymer flooding

FIG. 3

FIG. 4A

$y = 0.00047 x^3 - 0.05074 x^2 + 2.00148 x - 26.25397$
$R^2 = 0.9$

FIG. 4B

$y = -0.00269 x^3 + 0.48372 x^2 - 29.06152 x + 584.32340$
$R^2 = 0.98$

FIG. 5

$$y = -0.055\,x^2 + 7.391\,x - 148.377$$
$$R^2 = 0.898$$

FIG. 6

FIG. 7

FIG. 8

Determine whether an appropriate oil layer is developed, and then continue to identify displaceable units developable by polymer flooding in a case that the target reservoir is identified as a developed reservoir through a preset determination condition

Obtain relative permeability experiment data of a plurality of core samples, and obtain a fitting function of water saturation parameters and water cut parameters according to the relative permeability experiment data, where the core samples are obtained by core sampling in a working area

Calculate a water saturation parameter threshold interval corresponding to a water cut parameter threshold according to the fitting function and a preset water cut parameter threshold interval, and calculate a deep lateral resistivity parameter threshold interval corresponding to the water saturation parameter threshold interval

Obtain acoustic time difference parameter curves and deep lateral resistivity parameter curves at different depth positions, and determine, when a deep lateral resistivity parameter falls into the deep lateral resistivity parameter threshold interval and an acoustic time difference parameter falls into a preset acoustic time difference parameter threshold interval, a corresponding depth position as a position developable by polymer flooding, where a depth interval formed by positions developable by polymer flooding is taken as the displaceable unit developable by polymer flooding

Establish an identification chart of a cross plot of an acoustic time difference and a resistivity according to a sampling data set in an actual production process, where the sampling data set includes a group of known sampling points at effective development levels and measured values of a deep lateral resistivity parameter and an acoustic time difference parameter of each sampling point

Verify correctness of the obtained deep lateral resistivity parameter threshold interval according to a distribution condition of the sampling points in the identification chart, and adjust and apply an upper limit and a lower limit of the deep lateral resistivity parameter threshold interval according to a verification result, so as to identify the displaceable unit developable by polymer flooding

FIG. 9

FIG. 10

FIG. 11

FIG. 12

Collection and analysis module

Processing module

Identification module

FIG. 13

Preset analysis module

Collection and analysis module

Processing module

Identification module

Verification module

FIG. 14

## INTERNATIONAL SEARCH REPORT

| International application No. |
| --- |
| **PCT/CN2023/124047** |

| A. | CLASSIFICATION OF SUBJECT MATTER |
| --- | --- |

G06F 30/20(2020.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 聚合物, 驱替, 饱和度, 饱和值, 饱和指数, 产水率, 电阻率, 深度, 曲线, 拟合, 函数, 阈值, polymer, drive, displace, saturation, water, yield, resistivity, depth, curve, fit, function, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112709566 A (CHINA PETROLEUM & CHEMICAL CORP. et al.) 27 April 2021 (2021-04-27) <br> description, paragraphs [0008]-[0039], and figures 1-2 | 1-20 |
| A | CN 103558109 A (NORTHEAST PETROLEUM UNIVERSITY) 05 February 2014 (2014-02-05) <br> entire document | 1-20 |
| A | CN 105715241 A (CHINA UNIVERSITY OF PETROLEUM (EAST CHINA)) 29 June 2016 (2016-06-29) <br> entire document | 1-20 |
| A | CN 110232208 A (YANGTZE UNIVERSITY) 13 September 2019 (2019-09-13) <br> entire document | 1-20 |
| A | CN 111335857 A (CHINA NATIONAL OFFSHORE OIL CORP. et al.) 26 June 2020 (2020-06-26) <br> entire document | 1-20 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 February 2024** | **08 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| PCT/CN2023/124047 |

### C. DOCUMENTS CONSIDERED TO BE RELEVANT

| Category* | Citation of document, with indication, where appropriate, of the relevant passages | Relevant to claim No. |
|---|---|---|
| A | CN 115480315 A (SOUTHWEST PETROLEUM UNIVERSITY) 16 December 2022 (2022-12-16)<br>entire document | 1-20 |
| A | US 2020370411 A1 (DAGANG OIL FIELD COMPANY OF CNPC) 26 November 2020 (2020-11-26)<br>entire document | 1-20 |

Form PCT/ISA/210 (second sheet) (July 2022)

## INTERNATIONAL SEARCH REPORT
### Information on patent family members

International application No.

**PCT/CN2023/124047**

| Patent document cited in search report | | | Publication date (day/month/year) | Patent family member(s) | | | Publication date (day/month/year) |
|---|---|---|---|---|---|---|---|
| CN | 112709566 | A | 27 April 2021 | None | | | |
| CN | 103558109 | A | 05 February 2014 | None | | | |
| CN | 105715241 | A | 29 June 2016 | None | | | |
| CN | 110232208 | A | 13 September 2019 | None | | | |
| CN | 111335857 | A | 26 June 2020 | None | | | |
| CN | 115480315 | A | 16 December 2022 | None | | | |
| US | 2020370411 | A1 | 26 November 2020 | CN | 110242263 | A | 17 September 2019 |

Form PCT/ISA/210 (patent family annex) (July 2022)